# EUROPEAN PATENT APPLICATION

(11) **EP 1 749 566 A2**
(43) Date of publication of application: **07.02.2007**
(21) Application number: 06016023.1
(22) Date of filing: 01.08.2006
(51) Int. Cl.: B01F 17/16, B41N 3/08, C09D 5/02, C09D 11/02, C10M 173/02, C10G 33/04

(54) **Amine N-Oxide based surfactants**

(30) Priority: 04.08.2005 US 197887
(71) Applicant: AIR PRODUCTS AND CHEMICALS, INC., Allentown, PA 18195-1501 (US)
(72) Inventor: Van Court Carr Richard, Allentown,PA 18104 (US); Minnich Kristen Elaine, Germansville, PA 18053 (US); Marsella John Anthony, Allentown, PA 18104 (US); Lassila Kevin Rodney, Westford, MA 01886 (US)
(74) Representative: Kador & Partner

(57) **Abstract**

Surfactant compositions contain one or more compounds according to formula (1) 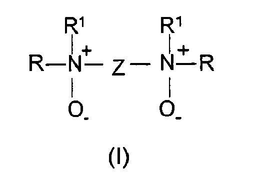 wherein R¹ is methyl, ethyl, or 1-propyl; R is a C4-C20 aryl, alkaryl, aralkyl, cyclic, alicyclic, or secondary, branched or bicyclic alkyl group, or a polyhydroxyalkyl group according to formula (A) 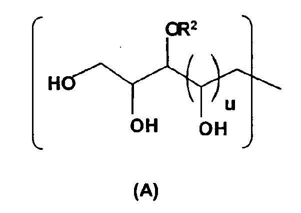 wherein u is an integer from 0 to 2 and R² is H, α-D-glucopyranosyl, β-D-pyranosyl, or β-D-galactopyranosyl; and Z is a linking group selected from the group consisting of 4,4'-methylenebis(cyclohexyl); CH₂(CH₂)ₙ{N⁺O-R¹-CH₂(CH₂)ₒ}ₚ, where p is an integer from 1 to 10 and n and o are each independently integers from 1 to 5; (CH₂)ᵣ[O(CH₂)ₛ]ₜO(CH₂)_{q}, where s is an integer from 2 to 4, t is an integer from 0 to 2, and r and q are each individually 2 or 3; (CH₂)ₘ, where m is an integer from 2 to 6; and isophorone residue (B)

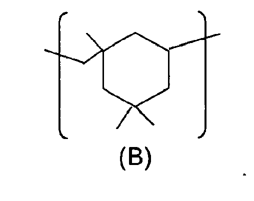

## Description

### FIELD OF THE INVENTION

This invention relates to surfactant compositions, and more particularly to surfactants having amine oxide functionality.

### BACKGROUND OF THE INVENTION

The ability to reduce the surface tension of water is of great importance in the application of water-based formulations because decreased surface tension translates to enhanced substrate wetting during use. Examples of water-based compositions requiring good wetting include coatings, inks, adhesives, fountain solutions for lithographic printing, cleaning compositions, metalworking fluids, agricultural formulations, electronics cleaning and semiconductor processing compositions, personal care products, and formulations for textile processing and oilfield applications. Surface tension reduction in water-based systems is generally achieved through the addition of surfactants, resulting in enhanced surface coverage, fewer defects, and more uniform distribution. Equilibrium surface tension (EST) is important when the system is at rest, while dynamic surface tension (DST) provides a measure of the ability of a surfactant to reduce surface tension and provide wetting under high speed application conditions.

The importance of the ability of a surfactant to achieve low surface tension at low use levels, the ability to affect foaming performance, and the surfactant's ability to provide efficient emulsification and solubilization are all of considerable industrial importance, as is well-appreciated in the art. And, although equilibrium surface tension reduction efficiency is important for some applications, other applications may require both equilibrium and dynamic surface tension reduction.

The foaming characteristics of a surfactant are also important because they can help define applications for which the surfactant might be suitable. For example, foam can be desirable for applications such as ore flotation and cleaning. On the other hand, in coatings, graphic arts and adhesive applications, foam is undesirable because it can complicate application and lead to defect formation. Thus foaming characteristics are frequently an important performance parameter.

The wide variety of applications for which surfactants are used, and the resultant variation in performance requirements, results in a need for a correspondingly large number of surfactants adapted to these various performance demands, and a need for suitable methods for making them.

### SUMMARY OF THE INVENTION

In one aspect, the invention provides a composition including one or more compounds according to formula (I) 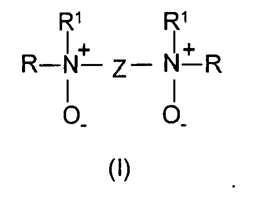 In formula (I), R¹ is methyl, ethyl, or 1-propyl; R is a C4-C20 aryl, alkaryl, aralkyl, cyclic, alicyclic, or secondary, branched or bicyclic alkyl group, or a polyhydroxyalkyl group according to formula (A) 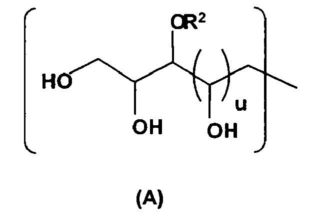 wherein u is an integer from 0 to 2 and R² is H, α-D-glucopyranosyl, β-D-pyranosyl, or β-D-galactopyranosyl. The group Z is a linking group selected from the group consisting of 4,4'-methylenebis(cyclohexyl); CH₂(CH₂)ₙ{N⁺O-R¹-CH₂(CH₂)ₒ}ₚ, where p is an integer from 1 to 10 and n and o are each independently integers from 1 to 5; (CH₂)ᵣ[O(CH₂)ₛ]ₜO(CH₂)_{q}, where s is an integer from 2 to 4, t is an integer from 0 to 2, and r and q are each individually 2 or 3; (CH₂)ₘ, where m is an integer from 2 to 6; and isophorone residue (B)

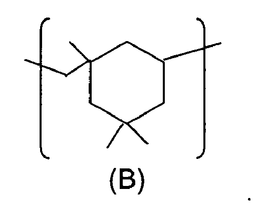

In another aspect, the invention provides a method for reducing surface tension in a formulation, including adding to the formulation an effective amount of one or more compounds according to formula (I) as shown above sufficient to reduce an equilibrium surface tension of the formulation to a value less than 52 mN/m.

### BRIEF DESCRIPTION OF THE DRAWINGS

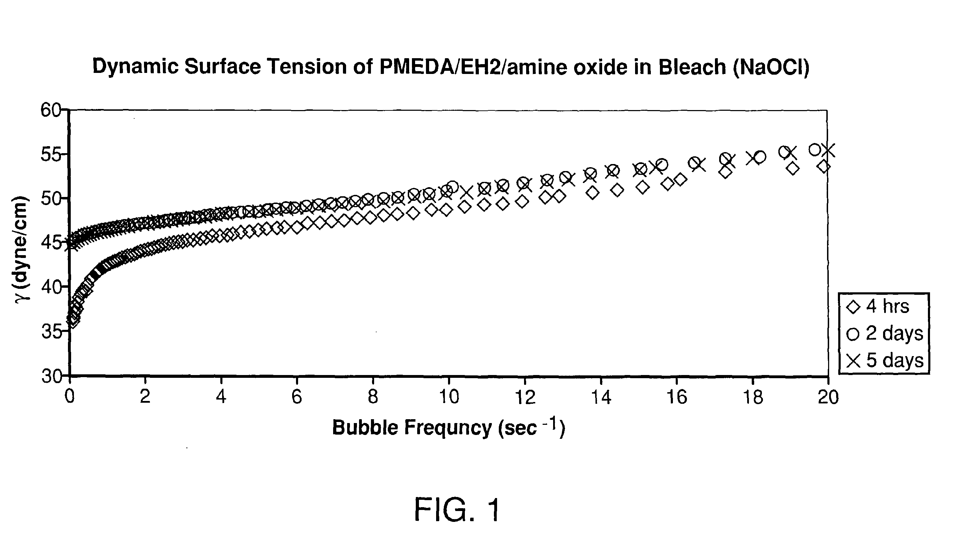

FIG. 1 shows dynamic surface tension of an exemplary surfactant of this invention after aging in sodium hypochlorite.

### DETAILED DESCRIPTION OF THE INVENTION

The present invention relates to surfactant compositions that are capable of effectively reducing the dynamic and/or equilibrium surface tension of aqueous systems, and/or affecting foaming performance of such systems. The compositions include one or more compounds according to formula (I) 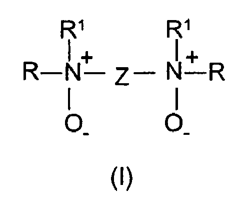 wherein R¹ is methyl, ethyl, or 1-propyl; R is a C4-C20 aryl, alkaryl, aralkyl, cyclic, alicyclic, or secondary, branched or bicyclic alkyl group, or a polyhydroxyalkyl group according to formula (A) 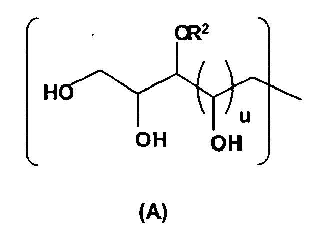 wherein u is an integer from 0 to 2 and R² is H, α-D-glucopyranosyl, β-D-pyranosyl, or β-D-galactopyranosyl; and Z is a linking group selected from the group consisting of 4,4'-methylenebis(cyclohexyl); CH₂(CH₂)ₙ{N⁺O-R¹-CH₂(CH₂)ₒ}ₚ. where p is an integer from 1 to 10 and n and o are each independently integers from 1 to 5; (CH₂)ᵣ[O(CH₂)ₛ]ₜO(CH₂)_{q}, where s is an integer from 2 to 4, t is an integer from 0 to 2, and r and q are each individually 2 or 3; (CH₂)ₘ, where m is an integer from 2 to 6; and isophorone residue (B). 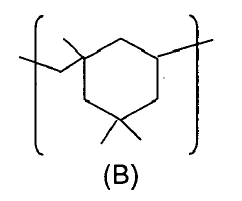 In many cases, R¹ will be methyl, and s will commonly be 2. In some embodiments, Z will be CH₂(CH₂)ₙ{N⁺O-R¹-CH₂(CH₂)ₒ}ₚ, and typically p will be 1 or 2 and n and o will independently be 1 or 2. Usually, m will be 2 or 3. Suitable exemplary R groups include, 2-butyl, isobutyl, 2-pentyl, 3-pentyl, isopentyl, neopentyl, 3-methylbut-2-yl, 2-hexyl, 3-hexyl, 2-methylpent-1-yl, isohexyl, 4-methylpent-2-yl, 4-methylpent-3-yl, 2-methylhex-1-yl, 5-methylhex-2-yl, 2-nonbornyl, 2-heptyl, 3-heptyl, 4-heptyl, 2-octyl, 3-octyl, 4-octyl, 2-ethylhex-1-yl, 2-bornyl, 3,5-dimethyloct-1-yl, 3,7-dimethyloct-1-yl, 3-methyl-10-ethyldodeo-1-yl, cyclohexyl, cyclohexylmethyl, benzyl, pinyl, pinylmethyl, phenethyl, *p*-methylbenzyl, phenyl, tolyl, xylyl, naphthyl, ethylphenyl, methylnaphthyl, dimethylnaphthyl, and norbornylmethyl. Typically, each R will be a branched or bicyclic alkyl group. In some embodiments, R will be a C5-C10 alkyl group.

### Preparation of Compounds of Formula (I)

Compounds according to formula (I) may be prepared by any method known in the synthetic organic chemical art. For example, they may be prepared by reductive alkylation of a bis secondary amine according to formula (II) to form a bis tertiary amine according to formula (III), followed by oxidation, for example with hydrogen peroxide.

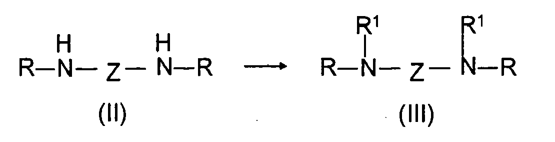

The bis secondary amines of formula (II) may for example be prepared according to known procedures such as reported in U.S. Pat. Nos. 4,126,640; 5,939,476; and 6,190,733; JP 62,074,814; and Casellin et al., Tetrahedron: Asymmetry, vol. 14, 2003, pp 1451-1454, or modifications thereof. In the case where the linking group Z is (CH₂)ᵣ[O(CH₂)ₛ]ₜO(CH₂)_{q}, the precursor amines may for example be prepared by the methods disclosed in U.S. Pat. No. 6,492,559 to Lassila et al. If Z is CH₂(CH₂)ₙ{N⁺O-R¹-CH₂(CH₂)ₒ}ₚ, the precursor amines may be made as described in U.S. Pat. No. 6,288,151 to Lassila et al.

In the case where R is a polyhydroxylalkyl group according to formula (A) above, compounds according to formula (III) may be obtained by any suitable procedure, for example that reported by J. M. Prestman, et. al. Langmuir, 13, 6857-6860 (1997). Although any of a variety of polyhydroxyalkyl groups may be incorporated, they most typically will be derived from the open-chain forms of reducing sugars, for example glucose. Exemplary polyhydroxyalkyl groups are derived from glucose; i.e., they are 1-deoxyglucityl groups. In general, suitable polyhydroxyalkyl groups may be derived from any of the group of reducing sugars consisting of glucose, fructose, maltose, lactose, galactose, mannose, and xylose. Typically, the reducing sugar will be an aldose, although ketoses may also be used, and both monosaccharides and disaccharides may be used, with convenient sources of the latter including high dextrose corn syrup, high fructose corn syrup, and high maltose corn syrup. Other useful polyhydroxyalkyl groups may be derived from glyceraldehydes. In some embodiments, R is a polyhydroxyalkyl group derived from glucose; i.e. the group is 1-deoxyglucityl. In this case, u is 2 and R² is hydrogen.

### Uses of Compounds of Formula (I)

Compounds according to formula (I) typically have good oxidative stability, making them of particular potential use in applications such as certain cleaning and metal treatment applications, textile and paper processing, as well as other industrial and household applications where bleaches, peroxides, and/or strong oxidizing agents are used where strong oxidizing conditions may exist. In such environments, the compounds may be dispersed in formulations that contain oxidizing agents including but not limited to hypochlorite, hydrogen peroxide, organic or inorganic peroxides or hydroperoxides, halogens, or nitric acid, and the compounds of formula (I) may show substantial resistance to oxidative degradation in such environments. They also typically show low levels of foaming, a desirable trait in applications such as certain Industrial & Institutional and household cleaning applications like hard surface cleaning, metal and metal parts cleaning, semi-conductor cleaning and processing, textile and paper processing, coatings, and adhesives and graphic arts applications. More generally, compositions according to the invention may include, in addition to one or more compounds of formula (I), a variety of other ingredients adapted to complement their utility in any of a number of applications. The performance properties of such products may be optimized for a specific application by appropriate selection of the basic structure of the surfactant from formula (I), and by suitable choices of substituents. Such optimization is routine, and within the ability of the person of ordinary skill in the art in the particular application area. Thus manipulation of these variables yields compounds which may be useful as emulsifiers or detergents, wetting agents, foaming agents, defoamers, rheology modifiers or associative thickeners, dispersants, and the like. As such, these compounds may be useful in applications such as coatings, inks, adhesives, agricultural formulations, fountain solutions, photoresist strippers and developers, shampoos, bodywashes, detergents, and other cleaning compositions. The compounds may also find use in oil-field exploration, development, and production applications such as enhanced oil recovery, fracturing and stimulation processes, and drilling and cementing operations, and may also be useful in various wet-processing textile operations, such as dyeing of fibers and fiber scouring and kier boiling. The general formulation principles governing each of these applications are well known in the respective arts, and a detailed description of the numerous application areas and methods for incorporating the compounds of this invention into such formulations is not necessary to their effective incorporation therein. However, as an indication of the wide scope of possible uses for compounds according to the invention, exemplary but nonlimiting formulations are set forth below for a number of application areas.

The terms "water-based", "waterborne", "aqueous", or "aqueous medium", or "aqueous carrier" as used herein refer to systems in which the solvent or liquid dispersing medium comprises at least 50 wt% water, preferably at least 90 wt%, and more preferably at least 95 wt% water. The dispersing medium may consist essentially of water, i.e., it may have no added solvents.

In broad terms, compounds according to formula (I) may be used in a wide range of formulations that include a second component, such that the application of the second component benefits from the surface active properties provided by the formula (I) material. It is to be understood that, although components of a pre- or post-preparation synthesis reaction mixture for preparation of the compounds according to formula (I) may be present, these do not count as part of the second component for purposes of this invention. Such components might for example include simple salts, solvents, catalysts, organic precursors, reagents, side products, and byproducts related to the preparation of the compound of formula (I), and these are not part of the second component. Typically, but not necessarily, the amount by weight of the second component in a formulation will be greater than that of the compound(s) of formula (I).

Formulations containing compounds according to formula (I) according to the invention are typically constructed so as to be fluid at 25°C. They are typically aqueous, but they need not be. The second component may consist of one or more materials selected from the group consisting of mineral acids, formic acid, acetic acid, tetramethylammonium hydroxide, nonvolatile organic materials, nonvolatile inorganic materials, and mixtures of these. As used herein, the term "nonvolatile" means that the indicated material either cannot boil, or it boils at a temperature of at least 150°C at a pressure of 760 Torr. Thus, although typical volatile solvents may be included in the formulation, they do not constitute a part of the second component. Such volatile solvents, or water, or a combination of these, may in some embodiments be part of a third component of the formulation. Typically, the second and third components in combination constitute between 0.1 and 99.9 wt% of the formulation.

Typical non-limiting examples of nonvolatile materials are given in the exemplary formulations provided hereinafter. Formulations according to the invention may include ready-to-use formulations, or concentrates. Either of these may be further diluted in use. Thus the concentration of the one or more compounds of formula (I) in a composition according to the invention may vary over a wide range. Typically it will be between 0.001 and 45 wt% of the formulation, although in some cases the amount may be as low as 0.00001 wt%. In many cases compositions at the higher end of this concentration range will be diluted during or before use in the intended application, although this is not required in all applications.

By using compounds of formula (I), it is possible to reduce surface tension in a waterborne composition or an industrial process. Thus the invention provides aqueous compositions comprising such compounds, wherein the surfactant provides good wetting properties when used in a surfactant effective amount. For example, the amount of surfactant that is effective to provide enhanced wetting properties of a water-based, organic compound containing composition may range from 0.00001 to 5 wt%, preferably from 0.0001 to 3 wt%, and most preferably from 0.001 to 3 wt%, based on total weight of the formulation. Typically, when used in an aqueous formulation, the surfactant will be used in an amount that reduces the equilibrium surface tension to less than about 52 mN/m, and the amount required to do this is generally at most 5 wt% and more commonly at most 1%. However, other amounts may be used to achieve other surface tension values. The most favorable amount will vary from one application to another, depending upon the amount and type of other species present in the formulation that are capable of affecting foam properties and wetting performance, for example latex polymers.

In the following typical aqueous-based compositions containing compounds of formula (I), a skilled worker in the relevant art will use sufficient amounts of the indicated components within the stated ranges to afford 100 wt% of components in the compositions.

A typical aqueous-based coating formulation that includes the surfactants of the invention may include a composition as shown below dispersed in an aqueous medium, with the composition typically constituting 30 to 80% of the total aqueous formulation:

**Typical Aqueous-Based Coating Formulation**

| | |
|---|---|
| 0 to 50 wt% | Pigment Dispersant/Grind Resin |
| 0 to 80 wt% | Coloring Pigments/Extender Pigments/Anti-Corrosive Pigments/Other Pigment Types |
| 5 to 99.9 wt% | Water-Borne/Water-Dispersible/Water-Soluble Resins |
| 0 to 30 wt% | Slip Additives/Antimicrobials/Processing Aids/Defoamers |
| 0 to 50 wt% | Coalescing or Other Solvents |
| 0.01 to 10 wt% | Surfactant/Wetting/Flow and Leveling Agents, other than Compound of Formula (I) |
| 0.001 to 5 wt% | Compound(s) of Formula (I) |

A typical water-based ink composition that includes the surfactants of the invention may include a composition as shown below dispersed in an aqueous medium, with the composition (excluding the coalescing solvent) typically constituting 20 to 60% of the total aqueous formulation:

**Typical Aqueous-Based Ink Composition**

| | |
|---|---|
| 1-50 wt% | Pigment |
| 0 to 50 wt% | Pigment Dispersant/Grind Resin |
| 0 to 50 wt% | Clay base in appropriate resin solution vehicle |
| 5 to 99.9 wt% | Water-borne/water-dispersible/water-soluble resins |
| 0 to 30 wt% | Coalescing Solvents |
| 0.01 to 10 wt% | Surfactant/Wetting Agents, other than Compound(s) of Formula (I) |
| 0.01 to 10 wt% | Processing Aids/Defoamers/Solubilizing Agents |
| 0.001 to 5 wt% | Compound(s) of Formula (I) |

A typical water-based agricultural composition that includes the surfactants of the invention may include a composition as shown below dispersed in an aqueous medium, with the composition typically constituting 0.01 to 80% of the total aqueous formulation:

**Typical Aqueous-Based Agricultural Composition**

| | |
|---|---|
| 0.1-50 wt% | Pesticide or Plant Growth Modifying Agent |
| 0.01 to 10 wt% | Surfactants, other than Compound(s) of Formula (I) |
| 0 to 5 wt% | Dyes |
| 0 to 20 wt% | Thickeners/Stabilizers/Co-surfactants/Gel Inhibitors/Defoamers |
| 0 to 25 wt% | Antifreeze agent (e.g. ethylene glycol or propylene glycol) |
| 0.001 to 5 wt% | Compound(s) of Formula (I) |

A typical fountain solution composition for planographic printing that includes the surfactants of the invention may include the following components:

**Typical Fountain Solution for Planographic Printing**

| | |
|---|---|
| 0.05 to 10 wt% | Film forming, water soluble macromolecule |
| 1 to 25 wt% | C2-C12 Alcohol, glycol, or polyol (water soluble, or soluble due to use of a co-solvent) |
| 0.01 to 20 wt% | Water soluble organic acid, inorganic acid, or a salt of these |
| 30 to 98.9wt% | Water |
| 0.001 to 5 wt% | Compound(s) of Formula (I) |

A typical hard surface cleaner that includes the surfactants of the invention may include the following components:

**Typical Hard Surface Cleaner**

| | |
|---|---|
| 0 to 25 wt% * | Anionic surfactant |
| 0 to 25 wt% * | Cationic surfactant |
| 0 to 25 wt% * | Nonionic surfactant (e.g. alcohol alkoxylates, etc.) |
| 0 to 20 wt% | Chelating agent (EDTA, citrate, tartrate, etc.) |
| 0 to 20 wt% * | Solvent (Glycol ether, lower alcohols, etc.) |
| 0.001 to 25 wt% | Compound(s) of Formula (I) |
| 0 to 2 wt% | Dye, fragrance, preservative, etc. |
| 0 to 40 wt% * | Alkali metal hydroxide |
| Balance to 100 wt% | Water, and optionally other ingredients |

| | |
|---|---|
| * To total, in combination, between 0.1 and 99 wt%. | |

A typical water-based photoresist developer or electronic cleaning composition that includes the surfactants of the invention may include the following components:

**Typical Aqueous-Based Photoresist Developer Composition**

| | |
|---|---|
| 0.1 to 3 wt% | Tetramethylammonium hydroxide |
| 0 to 4 wt% | Phenolic resin |
| 92.5 to 99.9 wt% | Water |
| 0.001 to 5 wt% | Compound(s) of Formula (I) |

A typical metalworking fluid that includes the surfactants of the invention may include the following components:

**Typical Synthetic Metalworking Fluid Formulation**

| | |
|---|---|
| 2.5 to 10 wt% | Block copolymer or other emulsifying agent |
| 10 to 25 wt% | Alkanolamine |
| 2 to 10 wt% | Organic monoacid |
| 0 to 5 wt% | Organic diacid |
| 40 to 84.4 wt% | Water |
| 1 to 5 wt% | Biocide |
| 0.001 to 5 wt% | Compound(s) of Formula (I) |

Surfactants are also used in a wide variety of products in the areas of personal care and household and industrial cleaning. The surfactants of the present invention may be used in any of these formulations to provide one or more benefits, with the exact structure of the surfactant compound depending upon the specific performance features required for a particular application. Typical formulations used in these markets are described in Louis Ho Tan Tai's book, Formulating Detergents and Personal Care Products: A Complete Guide to Product Development (Champaign, IL: AOCS Press, 2000) as well as in other books, literature, product formularies, etc. familiar to those skilled in the art. A few representative example formulations are described here as illustrations. For example, a rinse aid for use in household automatic dishwashing or in industrial and institutional warewashing may have the ingredients described below.

**Typical Rinse Aid Formulation**

| | |
|---|---|
| Compound(s) of Formula (I) | 0.001 to 45 wt% |
| Nonionic surfactant other than a compound of Formula (I) (e.g. alkoxylated alcohol(s), alkoxylated block copolymers, etc.) | 0 to 45 wt% |
| Hydrotrope (e.g. sodium xylenesulfonate, sodium toluenesulfonate, anionic surfactant(s), amphoteric surfactant(s), etc.) | 0 to 10 wt% |
| Isopropyl alcohol or ethyl alcohol | 0 to 10 wt% |
| Chelant (e.g. citric acid, etc.) | 5 to 20 wt% |
| Water, and optionally other ingredients | Balance to 100 wt% |

**Typical Powdered Laundry Detergent Formulation**

| Material | Amount by Weight in Conventional Formulation | Amount by Weight in Concentrated Formulation |
|---|---|---|
| Compound(s) of Formula (I) | 0.001 to 5 wt% | 0.001 to 15 wt% |
| Detergent surfactant(s) (e.g. anionic surfactants, alcohol alkoxylates, etc.) | 0.1 to 30 wt% | 0.1 to 50 wt% |
| Builder/co-builder (zeolites, sodium carbonate, phosphates, etc.) | 25 to 50 wt% | 25 to 60 wt% |
| Bleach and bleach activator (perborates, etc.) | 0 to 25 wt% | 0 to 25 wt% |
| Other Additives (fragrance, enzymes, hydrotropes, etc.) | 0 to 7 wt% | 1 to 10 wt% |
| Fillers (sodium sulfate, etc.) | 5 to 35 wt% | 0 to 12 wt% |

**Typical Aqueous Liquid Laundry Detergent Formulation**

| Material | Amount by Weight in Conventional Formulation | Amount by Weight in Concentrated Formulation |
|---|---|---|
| Compound(s) of Formula (I) | 0.001 to 25 wt% | 0.001 to 30 wt% |
| Detergent surfactant(s) (e.g. anionic surfactants, alcohol alkoxylates, etc.) | 0 to 35 wt% | 0 to 65 wt% |
| Builder/co-builder (citrate, tartrate, etc.) | 3 to 30 wt% | 0 to 36 wt% |
| Other Additives (fragrances, dyes, etc.) | 0.1 to 5 wt% | 1 to 5 wt% |
| Water and other solvents (e.g. lower alcohols) | 5 to 75 wt% | 1 to 56 wt% |

**Typical Non-Aqueous Laundry Detergent Formulation**

| Material | Amount by Weight |
|---|---|
| Compound(s) of Formula (I) | 0.001 to 30 wt% |
| Detergent surfactant(s) (e.g. anionic surfactants, alcohol alkoxylates, amine oxides, etc.) | 0.1 to 42 wt% |
| Builder/co-builder (zeolites, sodium carbonate, phosphates, citrate or tartrate salts, etc.) | 25 to 60 wt% |
| Bleach and bleach activator (perborates, etc.) | 0 to 20 wt% |
| Anti-redeposition aids (sodium carboxymethylcellulose, etc.) | 0.5 to 5 wt% |
| Other Additives (fragrance, enzymes, etc.) | 0 to 5 wt% |
| Polyalkylene glycol | 0 to 50 wt% |

**Typical 2-Part Industrial and Institutional Laundry Formulation**

| | Amount by Weight of Material in Each Pack |
|---|---|
| Pack A | |
| Compound(s) of Formula (I) | 0.001 to 20 wt% |
| Detergent surfactant(s) (e.g. anionic surfactants, alcohol alkoxylates, etc.) | 0 to 20 wt% |
| Antiredeposition aids (sodium carboxymethylcellulose, etc.) | 0.01 to 2 wt% |
| Water, and optionally other ingredients | Balance to 100 wt% |

| Pack B | |
|---|---|
| Sodium silicate | 5 to 10 wt% |
| Sodium metasilicate | 0 to 30 wt% |
| Tetrapotassium pyrophosphate | 0 to 10 wt% |
| potassium hydroxide | 0 to 35 wt% |
| potassium carbonate | 0 to 15 wt% |
| Water, and optionally other ingredients | Balance to 100 wt% |
| Mix Ratio Pack A:Pack B | 1:2 to 1:4 |

**Typical Shampoo or Liquid Body Wash Formulation**

| Material | Amount by Weight |
|---|---|
| Compound(s) of Formula (I) | 0.001 to 5 wt% |
| Anionic surfactant(s) (e.g. sodium or ammonium lauryl sulfate, sodium or ammonium lauryl sulfate, etc.) | 0.1 to 30 wt% |
| Amphoteric cosurfactant(s) (e.g. cocoamidopropyl betaine, etc.) | 0 to 20 wt% |
| Nonionic surfactant other than a compound of Formula (I) (e.g. alcohol alkoxylates, sorbitan esters, alkyl glucosides, etc.) | 0 to 20 wt% |
| Cationic polymers (e.g. polyquaternium, etc.) | 0 to 5 wt% |
| Other Additives (fragrance, dyes, oils, opacifiers, preservatives, chelants, hydrotropes, etc.) | 0 to 15 wt% |
| Polymeric thickeners (e.g. polyacrylate, etc.) | 0 to 2 wt% |
| Conditioning oils (e.g. sunflower oil, petrolatum, etc.) | 0 to 10 wt% |
| Citric acid | 0 to 2 wt% |
| Ammonium chloride or sodium chloride | 0 to 3 wt% |
| Humectants (e.g. propylene glycol, glycerin, etc.) | 0 to 15 wt% |
| Glycol distearate | 0 to 5 wt% |
| Cocoamide (i.e. cocoamide MEA, cocoamide MIPA, PEG-5 cocoamide, etc.) | 0 to 10 wt% |
| Dimethicone | 0 to 5 wt% |
| Behenyl alcohol | 0 to 5 wt% |
| Water, and optionally other ingredients | Balance to 100 wt% |

**Typical Hair Conditioner Formulation**

| Material | Amount by Weight |
|---|---|
| Compound(s) of Formula (I) | 0.001 to 10 wt% |
| Nonionic surfactant other than a compound of Formula (I), and/or fatty alcohol(s) (e.g. stearyl alcohol, etc.) | 0.1 to 10 wt% |
| Cationic surfactant(s) (e.g. cetrimonium chloride, etc.) | 0 to 10 wt% |
| Anionic surfactants (e.g. TEA-dodecylbenzenesulfonate, etc.) | 0 to 5 wt% |
| Silicones (e.g. dimethicone, dimethiconal, etc.) | 0 to 5 wt% |
| Cationic polymers (e.g. polyquaternium, etc.) | 0 to 10 wt% |
| Other Additives (fragrance, dyes, oils, opacifiers, preservatives, chelants, hydrotropes, etc.) | 0 to 10 wt% |
| Thickening polymers (e.g. hydroxyethylcellulose, polyacrylates, etc.) | 0 to 5 wt% |
| Potassium, ammonium or sodium chloride | 0 to 5 wt% |
| Humectant (e.g. propylene glycol, etc.) | 0 to 5 wt% |
| Panthenol | 0 to 2 wt% |
| Water, and optionally other ingredients | Balance to 100 wt% |

*****Typical Aqueous Sunscreen Formulation**

| Material | Amount by Weight |
|---|---|
| Compound(s) of Formula (I) | 0.001 to 30 wt% |
| Polyethylene glycol (e.g. PEG-8, etc.) | 0 to 30 wt% |
| Active sunscreen agents (e.g. octyl methoxycinnamate, azobenzone, homosalate, octyl salicylate, oxybenzone, octocrylene, butyl methoxydibenzoylmethane, octyl triazone, etc.) | 1 to 30 wt% |
| Esters and emollients (e.g. dimethicone, methylparaben, propylparaben, polysorbates, etc.) | 0 to 20 wt% |
| Thickening polymers (e.g. acrylates/C10-30 alkyl acrylate crosspolymer, PVP/hexadecene copolymer, etc.) | 0 to 20 wt% |
| Other Additives (fragrance, dyes, oils, opacifiers, preservatives, chelants, etc.) | 0 to 15 wt% |
| Solvent/hydrotropes (e.g. propylene glycol, benzyl alcohol, dicapryl ether, etc.) | 0 to 20 wt% |
| Triethanolamine | 0 to 5 wt% |
| Water, and optionally other ingredients | Balance to 100 wt% |

### Cement Admixture Formulations

Cement admixtures may be of any of several types, including superplasticizing, plasticizing, accelerating, set retarding, air entraining, water-resisting, corrosion inhibiting, and other types. Such admixtures are used to control the workability, settling and end properties (strength, impermeability, durability and frost/deicing salt resistance, etc.) of cementitious products like concretes, mortars, etc. The admixtures are usually provided as aqueous solutions and they can be added to the cementitious system at some point during its formulation. Surfactants of this invention may provide wetting, foam control, flow and leveling, water reduction, corrosion inhibition, high ionic strength tolerance and compatibility, and other benefits when used in such systems.

### Exemplary Cement Admixture Ingredients

| Material | Amount by Weight Relative to Cement Weight |
|---|---|
| Compound(s) of Formula (I) | 0.001 to 5 wt% |
| Solubilizing agents (solvent, hydrotropes, amines, etc.) * | 0 to 10 wt% |
| Polymers and/or oligomers (e.g. lignosulfonates, sulfonated melamine formaldehyde condensates, polycarboxylates, styrene-maleic anhydride oligomers, copolymers and their derivatives, etc.) * | 0 to 5 wt% |
| Functional Additives (defoamers, air entraining or detraining agents, pH control additives, corrosion inhibitors, set retarders, accelerators, preservatives, etc.) * | 0 to 5 wt% |
| Water | 40 to 75% |

| | |
|---|---|
| * To total, in combination, between 0.1 and 20 wt%. | |

### Oil and Gas Field Formulations

Surfactants of this invention, used alone or as a component in formulations, may provide surface tension reduction, foam control, and improved wetting in a variety of applications within the Oil and Gas industry. These may include, for example, formulations for the following uses.

In drilling applications, the surfactants may be used in formulations for dispersion of clays and drill cuttings, ROP (rate of penetration) enhancement, emulsification and de-emulsification, surface wetting and surface tension reduction, shale stabilization, and enhancement of hydration or dissolution of solid additives.

In cementing, stimulation and workover applications, uses may include formulations for spacers, cement dispersion, de-air entraining and defoaming, cement retardation, fracturing fluids, stimulation of coal bed methane, surface or interfacial tension reduction, oil/water wetting, and cleaning fluids.

In oil and gas production, uses may include rig wash formulations, defoaming of crude, water flooding/injection, defoaming for acid gas sweetening, oil/water separation, enhanced oil recovery, and inhibition or dispersion of asphaltenes, hydrates, scale and waxes.

Exemplary fluids for drilling, completing, cementing, stimulating, fracturing, acidizing, or working over, or other treating of subterranean wells, or for enhancing production from an oil- or gas-bearing formation or treating the produced oil or gas, typically include from 0.05 to 10 wt% of a surfactant of this invention in a fluid containing water and/or an organic liquid, which typically constitutes from 5 to 99.85 wt% of the fluid. The organic liquid is typically a petroleum product, although it need not be, and may for example include crude oil or any of the drilling mud base oils described below. If water is included, it may be from a freshwater, sea water, or brine source, or it may be provided by inclusion of an aqueous mineral acid such as hydrochloric acid, hydrofluoric acid, sulfuric acid, etc. Fluids for such applications usually also include between 0.1 and 80 wt% in total of one or more ingredients selected from weighting agents, viscosifiers, dispersants, drilling mud base oils, emulsifiers, soluble salts, cements, proppants, mineral acids, organic acids, biocides, defoamers, demulsifiers, corrosion inhibitors, friction reducers, gas hydrate inhibitors, hydrogen sulfide removal or control additives, asphaltene control additives, paraffin control additives, and scale control additives. A variety of specific materials are known in the art for performing these functions. Suitable nonlimiting examples of some of these materials follow, and others will be apparent to those of skill in the art.

*Weighting agents:* barium sulfate, hematite, and ilmenite.

*Viscosifiers:* clays (e.g. bentonite, attapulgite), water-soluble polymers (e.g. xanthan gum, guar, polysaccharides, modified polysaccharides), organophilic clays, and oil-soluble polymers.

*Dispersants:* naphthalene sulfonates, sulfonated melamine formaldehyde resins.

*Drilling mud base oils:* diesel, mineral oil, olefinic oils, paraffinic oils, and esters.

*Emulsifiers:* fatty acids, fatty amides, anionic surfactants, and nonionic alkoxylated surfactants.

*Soluble salts (e.g. for specific gravity adjustment, shale stabilization, or osmotic pressure control):* NaCl, NaBr, KCI, KBr, CaCl₂, CaBr₂, ZnCl₂, ZnBr₂, sodium formate, potassium formate, and cesium formate.

### Cements

*Other Surfactants:* cationic surfactants, amphoteric surfactants, alkyl glucosides, phosphate esters, and fluorosurfactants.

*Proppants:* ceramics, sintered bauxite, sand, and resin-coated sand.

*Organic Acids:* formic acid, acetic acid, citric acid.

*Mineral acids:* hydrochloric acid and hydrofluoric acid.

The foregoing classes of materials may find application, when used in combination with the surfactants of this invention, in a variety of oilfield applications. Depending upon the exact application and desired effect, compositions may be injected into a well or added to the stream of oil or gas produced by the well, all according to methods well known in the art.

Typical applications, and the ingredients commonly (although not necessarily) used in making formulations for these purposes, are shown immediately below. Other ingredients may also be present. It will be understood that each of these formulations will also contain a surfactant according to the invention.

*Water-based drilling muds:* weighting agents, viscosifiers, and dispersants.

*Oil-based drilling muds:* base oil, emulsifier, and viscosifier.

*Completion fluids:* soluble salts for specific gravity adjustment.

*Cement Formulations:* the cements themselves, in combination with dispersants.

*Spacers:* weighting agents and surfactants.

*Acidizing fluids:* surfactants and one or both of mineral acids and organic acids.

*Fracturing fluids:* viscosifiers, proppants, and surfactants.

Fluids for stimulating or enhancing production from a gas or oil bearing formation, may contain ingredients similar to those found in fracturing fluids, except for proppants. Finally, fluids for treating oil or gas produced in the above ways may include one or more of biocides, defoamers, demulsifiers, corrosion inhibitors, friction reducers, gas hydrate inhibitors, hydrogen sulfide removal or control additives, asphaltene control additives, paraffin control additives, and scale control additives.

Compounds according to formula (I) may have utility in preventing or slowing the formation of gas hydrates in petroleum-bearing formations or during transport of crude petroleums, where lower hydrocarbons such as methane, ethane, propane, n-butane, and iso- butane are commonly found. Water is also typically present in such formations and, under conditions of elevated pressure and reduced temperature, mixtures of the water and lower hydrocarbons tend to form clathrate hydrates. Such hydrates are water crystals that have formed a cage structure around a guest molecule such as the lower hydrocarbon. For example, at a pressure of about 1 MPa, ethane can form gas hydrates with water at temperatures below 4°C; at a pressure of 3 MPa, it can form gas hydrates with water at temperatures below 14°C. Temperatures and pressures such as these are commonly encountered in many environments in which natural gas and crude petroleum are produced and transported. The resulting hydrates frequently cause pipeline blockages due to growth and agglomeration of crystals inside pipes, conduits, valves, and other equipment, resulting in reduced flow and even equipment damage.

Compounds according to formula (I) may be used to reduce the nucleation, growth, and/or agglomeration of gas hydrates by including them in petroleum streams, thereby minimizing unscheduled shutdowns, maintenance and repair. The amount of compound of formula used for such an application may vary over a wide range, and may depend *inter alia* upon the relative proportions of the various lower hydrocarbons present in the crude petroleum, the temperature and pressure conditions to which the petroleum will be exposed, and the amount of water present. An appropriate amount for any given situation can easily be determined by routine experimentation, but typically the amount will be at least about 0.05 wt% relative to the amount of water present, more typically at least about 0.1 wt%, and most typically at least about 0.3 wt%. While there need be no upper limit to the amount of compound of formula (I) used, it may be most economical to limit it to at most about 5 wt% relative to water and typically at most 2 wt% relative to water.

As will be appreciated in light of the foregoing discussion, the compounds of this invention may find utility in a wide variety of applications. The present invention is further illustrated by the following examples, which are presented for purposes of demonstrating, but not limiting, the methods and compositions of this invention.

### EXAMPLES

In the following Examples, compounds according to invention are named with acronyms derived from the starting materials used in their preparation. The letters PM indicate permethyl. Referring to formula (I), EDA indicates a Z group derived from ethylenediamine, DETA indicates diethylenetriamine, and PACM indicates 4,4'-methylenebis(cyclohexyl amine). The letters EH indicate that the R groups were derived from 2-ethylhexanal, MIBK indicates methyl isobutyl ketone, and MIAK indicates methyl isoamyl ketone.

### Example 1 - Preparation of PMEDA/EH2 Oxide

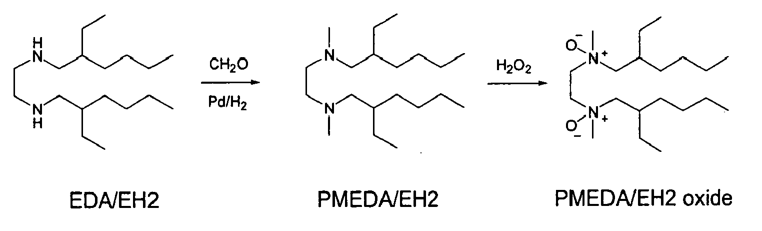

Into a 1-liter stainless steel autoclave was placed 118.0g of EDA/EH2, 300mL of isopropanol and 8.3g of 10% Pd/C (50 wt% water wet). The reactor was sealed and purged with nitrogen and then hydrogen. The contents of the reactor were heated to 80°C under 6.9 bar (100 psig) of hydrogen. The hydrogen pressure was increased to 57.4 bar (832 psig) and 64.4mL of 37% aqueous formaldehyde was added via a high pressure syringe pump over 126 minutes. At this point the hydrogen uptake abruptly ceased and the flow of formaldehyde was terminated. The pressure throughout the reaction was maintained constant by the admission of hydrogen from a 1-gallon ballast on demand by a dome regulator. The reaction mixture was concentrated in vacuo and used without further purification. To 24.5g of PMEDA/EH2 in 25mL of methanol was added 28.1g of 30% hydrogen peroxide. The reaction mixture was allowed to stir for 7 days at ambient temperature, at which point an aqueous suspension of platinum black was added slowly to effect decomposition according to the excess hydrogen peroxide. The reaction mixture was then filtered through CELITE diatomaceous earth and concentrated at 40°C and 1 torr to give 28.2g of PMEDA/EH2 oxide containing 8.1 wt% water by Karl Fischer (KF) titration. The structure was confirmed by ¹³C NMR.

### Example 2 - Preparation of PMPACMIMIBK2 Oxide

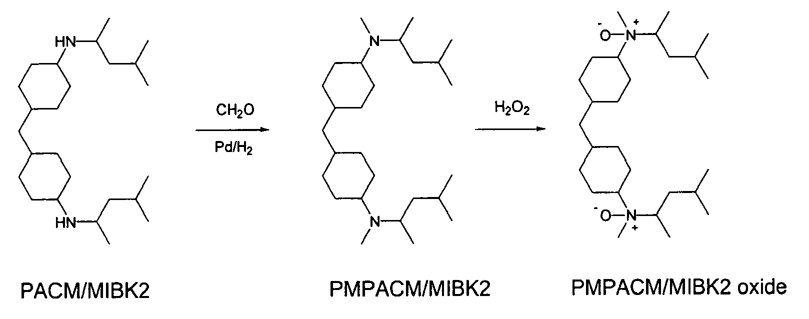

Into a 1-liter stainless steel autoclave was placed 240g of PACM/MIBK2, 240mL of isopropanol and 15.2g of 10% Pd/C (50 wt% water wet). The reactor was sealed and purged with nitrogen and then hydrogen. The contents of the reactor were heated to 90°C under 6.9 bar (100 psig) of hydrogen. The hydrogen pressure was increased to 58.1 bar (842 psig) and 77.1 mL of 37% aqueous formaldehyde was added via a high pressure syringe pump over 128 minutes. The reaction was allowed to proceed for an additional 219 minutes to ensure the complete disappearance of secondary amine. The pressure throughout the reaction was maintained constant by the admission of hydrogen from a 1-gallon ballast on demand by a dome regulator. The reaction mixture was concentrated at 190°C and 0.53 mbar (0.4 torr) to give 168.7g of a clear viscous oil. This material was used without further purification. To 4.1g of PMPACM/MIBK2 in 20mL of methanol was added 9.2g of 30% hydrogen peroxide. The reaction mixture was allowed to stir for 2 days at ambient temperature, at which point an aqueous suspension of platinum black was added slowly to effect decomposition according to the excess hydrogen peroxide. The reaction mixture was then filtered through CELITE diatomaceous earth and concentrated at 40°C and 1.3 mbar (1 torr) to give 4.6g of PMPACM/MIBK2 oxide containing 3.5 wt% water by KF titration. The structure was confirmed by ¹³C NMR.

### Example 3 - Preparation of PMDETAlMIBK2 Oxide

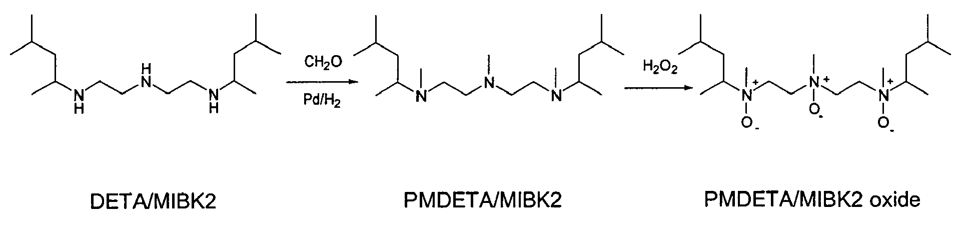

Into a 1-liter stainless steel autoclave was placed 49.5g of DETA/MIBK2, 350mL of isopropanol and 9.7g of 10% Pd/C (50 wt% water wet). The reactor was sealed and purged with nitrogen and then hydrogen. The contents of the reactor were heated to 90°C under 6.9 bar (100 psig) of hydrogen. The hydrogen pressure was increased to 55.6 bar (806 psig) and 48mL of 37% aqueous formaldehyde was added via a high pressure syringe pump over 109 minutes. The reaction was allowed to proceed for an additional 45 minutes to ensure the complete disappearance of secondary amine. The pressure throughout the reaction was maintained constant by the admission of hydrogen from a 1-gallon ballast on demand by a dome regulator. The reaction mixture was concentrated in vacuo and then distilled at 155°C and 6.7 mbar (5 torr) to give 28.7g of a clear liquid whose structure was confirmed by GC-MS and ¹³C NMR. To 28g of PMDETA/MIBK2 in 100mL of methanol was added 56.3g of 30% hydrogen peroxide. The reaction mixture was allowed to stir for 2 days at ambient temperature, at which point an aqueous suspension of platinum black was added slowly to effect decomposition according to the excess hydrogen peroxide. The reaction mixture was then filtered through CELITE diatomaceous earth and concentrated at 40°C and 1.3 mbar (1 torr) to give 31.8g of PMDETA/MIBK2 oxide containing 7.1 wt% water by KF titration. The structure was confirmed by ¹³C NMR.

### Example 4 - Preparation of PMEDA/camphor2 Oxide.

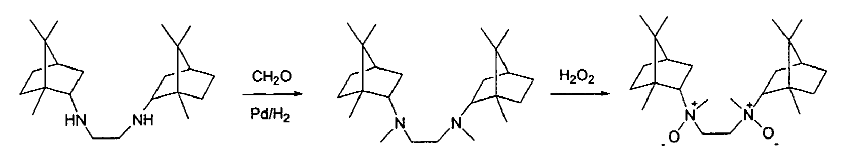

Into a 300-mL stainless steel autoclave was placed 9.3g of EDA/camphor2, 180mL of isopropanol and 8.0g of 10% Pd/C (50 wt% water wet). The reactor was sealed and purged with nitrogen and then hydrogen. The contents of the reactor were heated to 90°C under 6.9 bar (100 psig) of hydrogen.. The hydrogen pressure was increased to 57.8 bar (838 psig) and 13mL of 20.8 wt% aqueous formaldehyde was added via a high pressure syringe pump over 50 minutes. The reaction was allowed to proceed for an additional 40 minutes to ensure the complete disappearance of secondary amine. The pressure throughout the reaction was maintained constant by the admission of hydrogen from a 1-gallon ballast on demand by a dome regulator. The reaction mixture was concentrated in vacuo to give 9.5g of a white solid whose structure was confirmed by GC-MS and ¹³C NMR. This material was used without further purification. To 9.3g of PMEDA/camphor2 in 75mL of ethanol was added 27.5g of 30% hydrogen peroxide. The reaction mixture was allowed to stir for 7 days at ambient temperature, at which point an aqueous suspension of platinum black was added slowly to effect decomposition according to the excess hydrogen peroxide. The reaction mixture was then filtered through CELITE diatomaceous earth and concentrated at 40°C and 1.3 mbar (1 torr) to give 9.4g of PMEDA/camphor2 oxide containing 4.1 wt% water by KF titration. The structure was confirmed by GC-MS and ¹³C NMR.

### Examples 5-10 - Surface Tension Evaluation

Equilibrium surface tensions (EST) were determined using a Kruss K-12 tensiometer with a platinum Wilhelmy plate, maintaining the temperature at 25 ± 1°C by means of a constant temperature circulating bath. The results reported are averages of 10 measurements over a 10-minute period, and have a standard deviation of less than 0.1 dyne/cm.

Dynamic surface tensions (DST) were determined using a Kruss BP-2 Bubble Pressure Tensiometer by the maximum bubble pressure method, as described in Langmuir 1986, 2, 428-432, at a rate of 6 bubble/sec. Pseudo-equilibrium surface tensions (p-EST) were similarly measured, but at a rate of 0.1 bubble/sec.

**Table 1. Surface Tensions of Amine Oxide Solutions (0.1 wt%)**

| Example | | EST | p-EST | DST |
|---|---|---|---|---|
| Example 5. | PMEDA/EH2 Oxide | 28.0 (water) | 31.3 (water) | 38.8 (water) |
| | | 31.4 (6% bleach) | 45.8 (6% bleach) | 50.5 (6% bleach) |
| | | 26.5 (5% NaCl) | 29.1 (5% NaCl) | 35.4 (5% NaCl) |
| Example 6. Oxide | PMEDA/MIAK2 | 53.9 (water) | 59.5 (water) | 61.7 (water) |
| | | 52.8 (6% bleach) | 59.4 (6% bleach) | 61.2 (6% bleach) |
| Example 7. Oxide | PMDETA/MIAK2 | 45.5 (water) | 62.2 (water) | 64.8 (water) |
| | | 47.3 (6% bleach) | 64.8 (6% bleach) | 66.5 (6% bleach) |
| | | 48.2 (5% NaCl) | 63.1 (5% NaCl) | 66.0 (5% NaCl) |
| Example 8. Oxide | PMPACM/MIBK2 | 55.7 (water) | 56.7 (water) | 58.3 (water) |
| | | 38.9 (6% bleach) | 46.2 (6% bleach) | 51.4 (6% bleach) |
| Example 9. Oxide | PMDETA/MIBK2 | 64.5 (water) | 68.6 (water) | 69.7 (water) |
| | | 54.5 (6% bleach) | 72.9 (6% bleach) | 74.0 (6% bleach) |
| | | 52.1 (5% NaCl) | 70.1 (5% NaCl) | 71.5 (5% NaCl) |
| Example 10. Oxide | PMEDA/camphor2 | 50.2 (water) | 59.2 (water) | 62.9 (water) |

Table 1 shows the ability of these materials to reduce the surface tension of water, 5% aqueous NaCl solutions, and nominally 6% sodium hypochlorite bleach solution. All of the oxides show some efficacy in reducing surface tension, particularly with regard to equilibrium surface tension as measured by the Wilhelmy plate method.

FIG. 1 shows the results of an experiment designed to evaluate the stability of an exemplary surfactant of this invention, PMEDA/EH2 amine oxide, in a solution of sodium hypochlorite (laundry bleach) by measuring the dynamic surface tension by the maximum bubble pressure technique. Although there is some initial loss in surface tension reducing ability, the surface tension is stable after 2 days and the material is still effective at reducing surface tension.

Foam stabilities in various aqueous media were assessed by manually shaking 50 mL of a 0.1 wt % aqueous solution of each of several surfactants of this invention in a 200-mL bottle for five seconds, and recording the time for the foam to dissipate. The results are shown in Table 2.

**Table 2. Foam Dissipation of Amine Oxide Solutions**

| | Foam Dissipation Time (seconds) | | |
|---|---|---|---|
| Surfactant | 6% Bleach | Ultrapure Water | 5% NaCl |
| PMDETA/MIBK2 Oxide | 15 | 5 | 12 |
| PMEDA/EH2 Oxide | 6 | 4 | 13 |
| PMDETA/MIAK2 Oxide | 21 | 6 | 18 |
| PMPACM/MIBK2 Oxide | 10 | 3 | ---- |
| PMEDA/MIAK2 Oxide | 3 | 6 | ---- |

Many previously known amine oxide surfactants have a great propensity to foam. As an example, a 0.1wt% solution of dodecyldimethylamine oxide, when submitted to the same protocol as the polyamine oxides, generated foam that had still not dissipated after 5 minutes.

The data in the above Examples demonstrate that the compounds of this invention effectively reduce equilibrium surface tension, as well as dynamic surface tension, of aqueous solutions and serve to affect the foam properties of aqueous solutions. The demonstrated low equilibrium surface tension values may enhance the ability of formulations containing these compounds to wet out a given surface. The demonstrated low dynamic surface tension values provide information about the performance of a surfactant at conditions ranging from close to equilibrium (0.1 bubbles/sec) through high surface creation rates or dynamic conditions (10-20 bubbles/sec). In a practical sense, high surface creation rates are relevant to rapid processes such as spray or roller-applied coating, high speed printing operations, or the rapid application of an agricultural product or a cleaner. While applications such as coatings, inks, and adhesives require low foam or foam that dissipates quickly, other applications such as cleaning or floatation require a controlled amount of foam to be present and to persist.

As described in the foregoing discussions, the invention provides novel surfactants with properties that are suitable for use in a wide range of industrial and commercial applications. Such applications include water-based coatings, inks, adhesives, agricultural formulations, aqueous and non-aqueous cleaning compositions, personal care applications, and formulations for textile processing and oilfield applications.

Although the invention is illustrated and described herein with reference to specific embodiments, it is not intended that the subjoined claims be limited to the details shown. Rather, it is expected that various modifications may be made in these details by those skilled in the art, which modifications may still be within the spirit and scope of the claimed subject matter and it is intended that these claims be construed accordingly.

## Claims

1. A composition comprising one or more compounds according to formula (I) 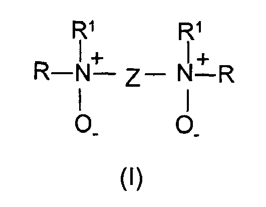 wherein R¹ is methyl, ethyl, or 1-propyl; R is a C4-C20 aryl, alkaryl, aralkyl, cyclic, alicyclic, or secondary, branched or bicyclic alkyl group, or a polyhydroxyalkyl group according to formula (A) 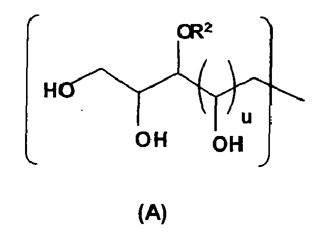 wherein u is an integer from 0 to 2 and R² is H, α-D-glucopyranosyl, β-D-pyranosyl, or β-D-galactopyranosyl; and Z is a linking group selected from the group consisting of 4,4'-methylenebis(cyclohexyl); CH₂(CH₂)ₙ{N⁺O-R¹-CH₂(CH₂)ₒ}ₚ, where p is an integer from 1 to 10 and n and o are each independently integers from 1 to 5; (CH₂)ᵣ[O(CH₂)ₛ]ₜO(CH₂)_{q}, where s is an integer from 2 to 4, t is an integer from 0 to 2, and r and q are each individually 2 or 3; (CH₂)ₘ, where m is an integer from 2 to 6; and isophorone residue (B)

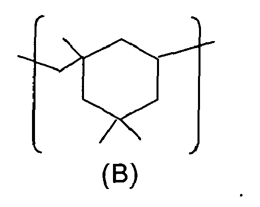

2. The composition according to claim 1, wherein each R¹ is methyl.

3. The composition according to claim 1, wherein each R is a branched or bicyclic alkyl group.

4. The composition according to claim 1, wherein each R is 2-ethylhex-1-yl.

5. The composition according to claim 1, wherein each R is 4-methylpent-2-yl.

6. The composition according to claim 1, wherein each R is 5-methylhex-2-yl.

7. The composition according to claim 1, wherein each R is a polyhydroxyalkyl group according to formula (A).

8. The composition according to claim 7, wherein the polyhydroxyalkyl group is 1-deoxyglucityl.

9. The composition according to claim 1, wherein Z is (CH₂)₂.

10. The composition according to claim 9, wherein each R¹ is methyl.

11. The composition according to claim 1, wherein Z is 4,4'-methylenebis(cyclohexyl).

12. The composition according to claim 11, wherein each R¹ is methyl.

13. The composition according to claim 1, wherein Z is CH₂(CH₂)ₙ{N⁺O-R¹-CH₂(CH₂)ₒ}ₚ.

14. The composition according to claim 13, wherein each R¹ is methyl.

15. The composition according to claim 13, wherein n, o, and p are all 1.

16. The composition according to claim 15, wherein each R¹ is methyl.

17. The composition according to claim 1, further comprising an oxidizing agent.

18. The composition according to claim 1, wherein the one or more compounds according to formula (I) constitute a first component, the composition further comprising a second component consisting of one or more materials selected from the group consisting of mineral acids, formic acid, acetic acid, tetramethylammonium hydroxide, nonvolatile organic materials, nonvolatile inorganic materials, and mixtures of these, said second component not including any component of a pre- or post-preparation synthesis reaction mixture for preparation of any of the one or more compounds according to formula (I), wherein the composition is fluid at 25°C.

19. The composition according to claim 18, wherein the second component is present in a greater amount by weight than the first component.

20. The composition according to claim 19, the composition further comprising an aqueous carrier.

21. The composition according to claim 18, wherein the one or more compounds according to formula (I) comprises a compound wherein each R is 2-ethylhex-1-yl.

22. The composition according to claim 18, wherein the one or more compounds according to formula (I) comprises a compound wherein each R is 4-methylpent-2-yl.

23. The composition according to claim 18, wherein the one or more compounds according to formula (I) comprises a compound wherein each R is 5-methylhex-2-yl.

24. The composition according to claim 18, wherein the one or more compounds according to formula (I) comprises a compound wherein Z is (CH₂)₂.

25. The composition according to claim 18, wherein the one or more compounds according to formula (I) comprises a compound wherein Z is CH₂(CH₂)ₙ{N⁺O-R¹-CH₂(CH₂)ₒ}ₚ and wherein n, o, and p are all 1.

26. A method for reducing surface tension in a formulation, comprising adding to the formulation an effective amount of one or more compounds according to formula (I) sufficient to reduce an equilibrium surface tension of the formulation to a value less than 52 mN/m 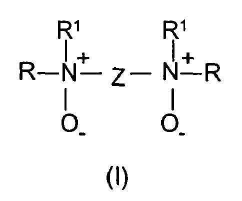 wherein R¹ is methyl, ethyl, or 1-propyl; R is a C4-C20 aryl, alkaryl, aralkyl, cyclic, alicyclic, or secondary, branched or bicyclic alkyl group, or a polyhydroxyalkyl group according to formula (A) 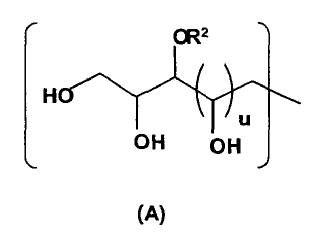 wherein u is an integer from 0 to 2 and R² is H, α-D-glucopyranosyl, β-D-pyranosyl, or β-D-galactopyranosyl; and Z is a linking group selected from the group consisting of 4,4'-methylenebis(cyclohexyl); CH₂(CH₂)ₙ{N⁺O-R¹-CH₂(CH₂)ₒ}ₚ, where p is an integer from 1 to 10 and n and o are each independently integers from 1 to 5; (CH₂)ᵣ[O(CH₂)ₛ]ₜO(CH₂)_{q}, where s is an integer from 2 to 4, t is an integer from 0 to 2, and r and q are each individually 2 or 3; (CH₂)ₘ, where m is an integer from 2 to 6; and isophorone residue (B)

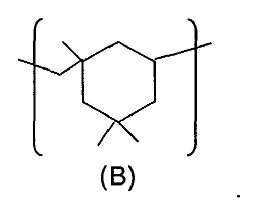

27. The method according to claim 26, wherein the formulation is aqueous.

28. The method of claim 27 wherein the formulation comprises oxidizing agents.
